# EUROPÄISCHE PATENTSCHRIFT

(11) **EP 1 185 572 B1**
(45) Veröffentlichungstag und Bekanntmachung des Hinweises auf die Patenterteilung: **16.10.2002**
(21) Anmeldenummer: 00931146.5
(22) Anmeldetag: 09.05.2000
(51) Int. Cl.: C08G 18/10, C08G 18/08

(54) **PHOSPHATSTABILISIERTE, KONDENSATIONSVERNETZENDE POLYURETHANMASSEN, EIN VERFAHREN ZU IHRER HERSTELLUNG SOWIE IHRE VERWENDUNG**
PHOSPHATE-STABILISED POLYURETHANE MATERIALS, CROSS-LINKED BY CONDENSATION, METHOD FOR THEIR PRODUCTION AND USE THEREOF
MATERIAUX DE POLYURETHANNE A RETICULATION PAR CONDENSATION, STABILISES PAR DES PHOSPHATES, LEUR PROCEDE DE PRODUCTION ET LEUR UTILISATION

(30) Priorität: 21.05.1999 DE 19923300
(43) Veröffentlichungstag der Anmeldung: 13.03.2002
(73) Patentinhaber: Bayer Aktiengesellschaft, 51368 Leverkusen (DE)
(72) Erfinder: WALTER, Ulrich, Verstorben (DE); SCHMALSTIEG, Lutz, D-50676 Köln (DE); LEMMERZ, Ralf, D-51375 Leverkusen (DE); ECKHARDT, Alexander, D-51065 Köln (DE)
(86) Internationale Anmeldenummer: EP0004132
(87) Internationale Veröffentlichungsnummer: WO00071595

(56) Entgegenhaltungen:
- EP-A- 0 353 551
- EP-A- 0 596 360
- EP-A- 0 608 888
- EP-A- 0 831 108
- DE-C- 19 507 416
- US-A- 4 361 692

## Beschreibung

Die Erfindung betrifft über eine Silanpolykondensation vernetzende Polyurethanmassen aus alkoxysilanfunktionellen Polyurethanen, basischen Füllstoffen, Phosphorverbindungen, Aminosilanen, metallorganischen Verbindungen und gegebenenfalls weiteren Hilfsstoffen, ein Verfahren zu deren Herstellung sowie deren Verwendung.

Alkoxysilanfunktionelle Polyurethane, die über eine Silanpolykondensation vernetzen, gehören zum lange bekannten Stand der Technik. Ein Übersichtsartikel zur Thematik findet sich in "Adhesives Age" 4/1995, Seite 30 ff. (Autoren: Ta-Min Feng, B. A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet. Bei diesen Anwendungen werden hohe Anforderungen z.B. an das Dehn-, Adhäsionsvermögen und an die Aushärtegeschwindigkeit gestellt.

Beispielhaft werden derartige Produkte beschrieben in den EP-A-596360, EP-A 831 108, EP-A 807 649, EP-A 676 403. Bei der Formulierung derartiger Systeme werden typischerweise metallorganische Katalysatoren sowie Haftvermittler vom Aminosilan-Typ mitverwendet. Durch den Zusatz der Aminosilanverbindungen kommt es aber oftmals zu Lagerstabilitätsproblemen, insbesondere dann, wenn höhere Anteile an Aminosilanen eingesetzt werden, um eine gute Haftung auf problematischen Untergründen zu erzielen.

Aufgabe der vorliegenden Erfindung war es daher, Aminosilane enthaltende, über eine Silanpolykondensation vernetzende Polyurethanmassen bereitzustellen, die eine verbesserte Lagerstabilität aufweisen.

Diese Aufgabe konnte mit der Bereitstellung der nachstehend näher beschriebenen kondensationsvemetzenden Polyurethanmassen gelöst werden.

Gegenstand der Erfindung sind über eine Silanpolykondensation vernetzende Polyurethanmassen aus
A) mindestens einem alkoxysilanfunktionellen Polyurethan mit Endgruppen der allgemeinen Formel (I) 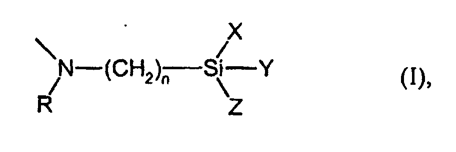 in welcher
   - R: für einen organischen Rest mit 1 bis 12 Kohlenstoffatomen steht,
   - n: für die Zahl 2, 3 oder 4 steht und
   - X, Y, Z: gleiche oder verschiedene organische Reste darstellen, mit der Maßgabe, daß mindestens einer der Reste eine Alkoxygruppe mit bis 4 Kohlenstoffatomen, vorzugsweise eine Methoxy- oder Ethoxygruppe darstellt,
B) mindestens einem basischen Füllstoff,
C) mindestens einer Phosphorverbindung aus der Gruppe der Orthophosphorsäureester und/oder eines Esters oder Polyphosphorsäure der allgemeinen Formel (II)

   O=P(OR')₃₋ₘ(OH)ₘ (II),

   in welcher
   - m: für die Zahl 1 oder 2 steht,
   - R': für einen gegebenenfalls substituierten linearen oder verzweigten C₁-C₃₀-Alkyl-, Acyl-, C₂-C₃₀-Alkenyl- oder Alkoxyalkyl-, C₅-C₁₄-Cycloalkyl- oder Arylrest oder ein Triorganosilyl- oder Diorganolkoxysilylrest steht, der innerhalb des Moleküls gleich oder verschieden sein kann,
D) mindestens einem Aminosilan der allgemeinen Formel (III) 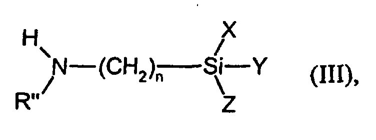 in welcher
   - R": für ein Wasserstoffatom, einen aliphatischen Kohlenwasserstoffrest mit 1 bis 4 Kohlenstoffatomen, eine Trialkoxysilylpropylgruppe oder eine Aminoethylgruppe steht und n, bzw. X, Y, Z die bei Formel (I) genannte Bedeutung haben,
E) metallorganischen Verbindungen und
F) gegebenenfalls weiteren Hilfsstoffen.

Die Verwendung organischer Phosphorverbindungen zur Stabilisierung von Silikon-Dichtstoffsystemen, namentlich RTV 1-Systemen ist z.B. aus der DE-A 19 507 416 bekannt. Gemäß deren Lehre verbessert der Zusatz der Organophosphorverbindungen die Lagerstabilität der RTV 1-Systeme. In diesen Systemen wird durch Zusatz der Organophosphorverbindungen eine Depolymerisation verhindert, die in Alkoxysilan-Endgruppen aufweisenden Polyurethanen naturgemäß überhaupt nicht auftreten kann. In Anbetracht dieses Sachverhaltes ist es ausgesprochen überraschend, daß die erfindungsgemäßen Organophosphor-Verbindungen auch die Lagerstabilität von über Silanpolykondensation vernetzenden Polyurethansystemen positiv beeinflussen.

Alkoxysilan-Endgruppen aufweisende Polyurethane A) sind prinzipiell bekannt und werden hergestellt durch Umsetzung langkettiger, vorzugsweise linearer NCO-Prepolymere mit aminofunktionellen Silanen der. allgemeinen Formel (Ia), 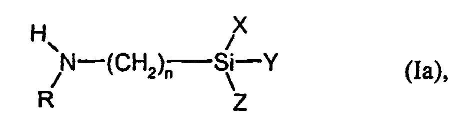 in welcher
- R: für einen organischen Rest mit 1 bis 12 Kohlenstoffatomen vorzugsweise eine Phenylgruppe oder einen Rest der allgemeinen Strukturformel (Ib) 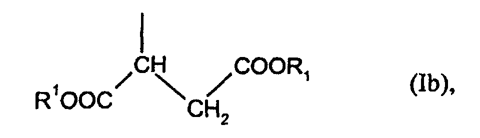
steht,
in welcher
- R₁: für eine Alkylgruppe mit 1 bis 4 Kohlenstoffatomen steht.

Besonders bevorzugt steht R für einen Rest der allgemeinen Strukturformel (II) wobei R₁ die obengenannte Bedeutung hat.

In der obengenannten Strukturformel steht n für die Zahl 2, 3 oder 4, vorzugsweise 3.

X, Y, Z bedeuten in der obengenannten Strukturformel gleiche oder verschiedene organische Reste, mit der Maßgabe, daß mindestens einer der Reste eine Alkoxygruppe mit 1 bis 4 Kohlenstoffatomen darstellt. Vorzugsweise ist mindestens einer der Reste eine Methoxy- oder Ethoxygruppe. Besonders bevorzugt steht X, Y und Z für jeweils eine Methoxygruppe. Beispiele für geeignete Aminofunktionelle Silane sind N-Methyl-3-aminopropyltrimethoxysilan, N-Methyl-3-aminopropyltriethoxysilan, N-Butyl-3-aminopropyltrimethoxysilan. vorzugsweise einsetzbar ist N-Phenyl-3-aminopropyltrimethoxysilan.

Besonders bevorzugt einsetzbar sind die in der EP-A 596360 beschriebenen Asparaginsäureester wie sie durch Umsetzung von Aminosilanen der allgemeinen Strukturformel (Ia) mit Malein- oder Fumarsäureestern der Formel (IV) entstehen.

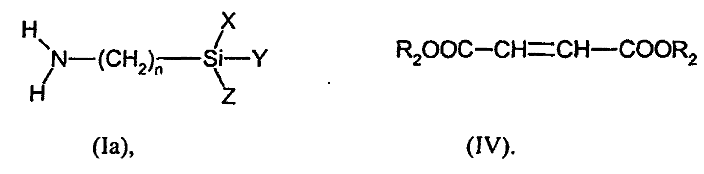

In der Formel (Ia) haben n sowie X, Y, Z die vorstehend bei Formel (I) genannte Bedeutung. In der Formel (IV) steht R₂ für einen Alkylrest mit 1 bis 4 Kohlenstoffatomen.

Zur Herstellung der Alkoxysilan-Endgruppen aufweisenden Polyurethane A) einsetzbare NCO-Prepolymere werden in bekannter Weise durch Umsetzung von Polyetherpolyolen, vorzugsweise Polyetherdiolen mit Diisocyanaten hergestellt und weisen einen NCO-Gehalt zwischen 0,4 und 4 % auf.

Die erfindungsgemäß einsetzbaren basischen Füllstoffe B) sind gefällte oder gemahlene Kreiden, Metalloxide, -sulfate, -silicate, -hydroxyde, -carbonate und -hydrogencarbonate. Weitere Füllstoffe sind z.B. verstärkende und nichtverstärkende Füllstoffe, wie pyrogene oder gefällte Kieselsäuren, Ruß oder Quarzmehl. Sowohl die basischen Füllstoffe als auch die weiteren verstärkenden oder nichtverstärkenden Füllstoffe können gegebenenfalls oberflächenmodifiziert sein. Besonders bevorzugt sind als basische Füllstoffe B) gefällte oder gemahlene Kreiden sowie pyrogene Kieselsäuren einsetzbar, die gegebenenfalls oberflächenbehandelt sien können. Bei Komponente B) kann es sich selbstverständlich auch um Gemische von Füllstoffen handeln.

Die erfindungsgemäßen Phosphorverbindungen C) sind Ester der Ortho- und Phosphorsäure bzw. Gemische davon. Die Ester der Orthophosphorsäure werden durch die folgende allgemeine Formel (II) beschrieben:

O=P(OR')₃₋ₘ(OH)ₘ (II),

in welcher
- m: für die Zahl 1 oder 2 steht und
- R': die Bedeutung von einem gegebenenfalls substituierten linearen oder verzweigten C₁-C₃₀-Alkyl-, Acyl-, C₂-C₃₀-Alkenyl- oder Alkoxyalkyl-, C₅-C₁₄-Cycloalkyl- oder Arylrest oder ein Triorganosilyl- oder Diorganoalkoxysilylrest hat, und R' innerhalb des Moleküls gleich oder verschieden sein kann.

In einer bevorzugten Ausführungsform der vorliegenden Erfindung ist die Phosphorverbindung C) ein Ester der Orthophosphorsäure mit mindestens einem gegebenenfalls substituierten linearen oder verzweigten C₄-C₃₀-Alkylrest R'. Beispiele für erfindungsgemäße Phosphorsäureester C) sind primäre und sekundäre Ester der Orthophosphorsäure sowie deren Gemische, wie Di-(2-ethylhexyl)-phosphat, Dihexadecylphosphat, Diisononylphosphat, Mono-isodecylphosphat und Mono-(2-ethylhexyl)-phosphat, Komponente C) kann ebenfalls ein Ester von Polyphosphorsäure oder ein Gemisch aus mehreren Polyphosphorsäureestern sein. Geeignet sind ebenfalls Salze der Ortho- und Polyphosphorsäureester, wie z.B. Alkalimetallsalze.

Als Komponente D) werden die an sich bekannten Aminosilanverbindungen der allgemeinen Strukturformel (III) 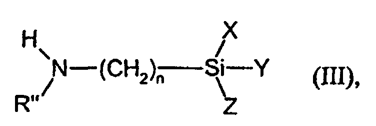 in welcher
- R": für ein Wasserstoffatom, einen aliphatischen Kohlenwasserstoffrest mit 1 bis 4 Kohlenstoffatomen, eine Trialkoxysilylpropylgruppe oder eine Aminoethylgruppe steht und n, bzw. X, Y, Z die obengenannte Bedeutung haben,

Beispiele für einsetzbare Aminosilanverbindungen sind 3-Aminopropyltrimethoxysilan, 3-Aminopropyltriethoxysilan, N-Methyl-3-aminopropyltrimethoxysilan, N-Aminoethyl-3-aminopropyltrimethoxysilan, N-Aminoethyl-3-aminopropyltriethoxysilan, 3-Aminopropyl-methyl-diethoxysilan und N,N-Bis-trimethoxysilyl-propylamin, N-Aminoethyl-3-aminopropylmethyldimethoxysilan.

Als Komponente E) können alle metallorganischen Katalysatoren eingesetzt werden, die bekanntermaßen die Silanpolykondensation fördern. Dies sind insbesondere Verbindungen des Zinns und des Titans. Bevorzugte Zinnverbindungen sind beispielsweise Dibutylzinndilaurat, Dibutylzinndiacetat und Dioctylzinnmaleat, Zinn(II)-octoat oder Dibutylzinn-bis-acetoacetonat. Bevorzugte Titanverbindungen sind beispiclsweise Alkyltitanate, wie Tetraisopropyltitanat, Tetrabutyltitanat und chelatisierte Titanverbindungen, wie Diisobutyl-bisacetessigsäureethylester-titanat. Besonders bevorzugt wird Dibutylzinn-bis-acetoacetonat als Komponente E) eingesetzt.

Zusätze und Hilfsstoffe F) im Sinne der Erfindung seien genannt: Trockenmittel, Lichtschutzmittel, Weichmacher, andere als die unter D) genannten Haftmittel, Thixotropiermittel, Pigmente und Fungizide.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan. Als Weichmacher seien beispielhaft Phthalsäureester, Adipinsäureester, Alkylsulfonsäureester des Phenols oder Phosphorsäureester genannt. Als Thixotropiermittel seien beispielhaft Polyamide, hydrierte Rizinusöl-Folgeprodukte oder auch Polyvinylchlorid genannt. Als Haftvermittler können zusätzlich zu den unter D) genannten Verbindungen Epoxysilane und/oder Mercaptosilane eingesetzt werden.

Die erfindungsgemäßen Polyurethanmassen bestehen vorzugsweise aus 30 bis 80 Gew.-% an Komponente A), 10 bis 50 Gew.-% an Komponente B), 0,5 bis 5 Gew.-% an Komponente C), 0,5 bis 3 Gew.-% an Komponente D), 0,02 bis 1 Gew.-% an Komponente E) sowie 0 bis 40 Gew.-% an Komponente F).

Gegenstand der vorliegenden Erfindung ist auch ein Verfahren zur Herstellung der erfindungsgemäßen kondensationsvernetzenden Polyurethanmassen, dadurch gekennzeichnet, daß die Komponenten A), B), C), E) sowie gegebenenfalls F) unter Ausschluß von Feuchtigkeit vermischt werden und anschließend mit der Komponente D) versetzt werden.

Gegenstand der vorliegenden Erfindung ist auch die Verwendung der erfindungsgemäßen kondensationsvernetzenden Polyurethanmassen als Dichtstoff, Kleb- oder Beschichtungsmaterial.

Die erfindungsgemäßen kondensationsvernetzenden Polyurethanmassen zeigen einerseits eine schnelle Aushärtung mit Hautbildungszeiten zwischen 15 und 120 Minuten, besitzen aber andererseits eine hervorragende Lagerstabilität im Temperaturbereich bis zu 60°C. Die vernetzten Polymere zeichnen sich aus durch excellente mechanische Eigenschaften und hervorragende Haftung, insbesondere Naßhaftung auf allen erdenklichen Substraten wie beispielsweise Metall, Keramik, Kunststoff, Stein oder Beton.

### Beispiele

### Beispiel 1

### Herstellung eines Alkoxysilyl-Endgruppen aufweisenden Polyurethans

2000 g eines Polyetherdiols der OH-Zahl 28, hergestellt durch Propoxylierung von Propylenglykol und anschließende Ethoxylierung des Propoxylierungsproduktes (PO/EO-Verhältnis = 80:20) werden mit 155,4 g Isophorondiisocyanat bei 70°C unter Zusatz von 0,02 g Dibutylzinndilaurat bis zum Erreichen des theoretischen NCO-Gehaltes von 0,78 % prepolymerisiert. Nach Abkühlen auf 60°C tropft man 140,4 g N-(3-Trimethoxysilylpropyl)-asparaginsäure-diethylester (hergestellt gemäß EP-A 596 360, Beispiel 5) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 76 000 mPas (23°C).

### Beispiel 2

### Herstellung eines Alkoxysilyl-Endgruppen aufweisenden Polyurethans

2000 g eines Polyetherdiols der OH-Zahl 28, hergestellt durch Propoxylierung von Propylenglykol und anschließende Ethoxylierung des Propoxylierungsproduktes (PO/EO-Verhältnis = 80:20) werden mit 155,4 g Isophorondiisocyanat bei 70°C unter Zusatz von 0,02 g Dibutylzinndilaurat bis zum Erreichen des theoretischen NCO-Gehaltes von 0,78 % prepolymerisiert. Nach Abkühlen auf 60°C tropft man 102 g N-Phenyl-3-aminopropyltrimethoxysilan zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 86 000 mPas (23°C).

### Beispiel 3

### Herstellung einer erfindungsgemäßen Polyurethanmasse

In einem handelsüblichen Planetenmischer werden die folgenden Komponenten zu einem gebrauchsfertigen Dichtstoff verarbeitet.

| | |
|---|---|
| 36,4 Gew.-Teile | Polyurethan aus Beispiel 1 |
| 12,9 Gew.-Teile | Diisoundecylphtalat (Weichmacher) |
| 0,02 Gew.-Teile | Dibutylzinn-bis-acetoacetonat (10 %ige gelöst in Solventnaphta® 100) |
| 1,50 Gew.-Teile | Vinyltrimethoxysilan |
| 46,2 Gew.-Teile | Fällungskreide (Typ: Socal® U1S2 der Firma Solvay GmbH) |
| 2,00 Gew.-Teile | Di-2-ethylhexylphosphat |
| 1,40 Gew.-Teile | Disparlon® NVG 8403 S (Thioxotropiermittel der Kusumoto Chem. Ltd.) |

Die Mischung wird 10 Minuten bei einem Druck von 100 mbar dispergiert, wobei die Innentemperatur auf 60°C ansteigt. Anschließend werden 1,5 Gew.-Teile N-Aminoethyl-3-aminopropyl-trimethoxysilan zugegeben und bei einem Druck von 100 mbar durch 10 minütiges Rühren eingearbeitet. Der so hergestellte Dichtstoff zeigt eine ausgezeichnete Standfestigkeit, haftet auf nahezu allen Untergründen und härtet mit einer Hautbildungszeit von 30 Minuten aus.

Das Produkt wird in eine handelsübliche Kartusche abgefüllt und bei 50°C gelagert. Nach einer Lagerdauer von 90 Tagen läßt sich das Produkt noch problemlos verarbeiten und zeigt unveränderte Produkteigenschaften.

### Beispiel 4

### Herstellung einer erfindungsgemäßen Polyurethanmasse

In einem handelsüblichen Planetenmischer werden die folgenden Komponenten zu einem gebrauchsfertigen Dichtstoff verarbeitet:

| | |
|---|---|
| 36,0 Gew.-Teile | Polyurethan aus Beispiel 2 |
| 12,6 Gew.-Teile | Diisoundecylphtalat (Weichmacher) |
| 0,02 Gew.-Teile | Dibutylzinn-bis-acetoacetonat (10 %ige gelöst in Solventnaphta® 100) |
| 2,20 Gew.-Teile | Vinyltrimethoxysilan |
| 45,68 Gew.-Teile | Fällungskreide (Typ: Socal® U1S2 der Fa. Solvay GmbH) |
| 2,5 Gew.-Teile | Mono-2-ethylhexylphosphat |
| 1,4 Gew.-Teile | Cabosil® TS 720 (pyrogene Kieselsäure der Fa. Cabot GmbH) |

Die Mischung wird 10 Minuten bei einem Druck von 100 mbar dispergiert, wobei die Innentemperatur auf 60°C ansteigt. Anschließend werden 2,1 Gew.-Teile N-Aminoethyl-3-aminopropyl-trimethoxysilan zugegeben und bei einem Druck von 100 mbar durch 10 minütiges Rühren eingearbeitet. Der so hergestellte Dichtstoff zeigt eine ausgezeichnete Standfestigkeit, haftet auf nahezu allen Untergründen und härtet mit einer Hautbildungszeit von 40 Minuten aus.

Das Produkt wird in eine handelsübliche Kartusche abgefüllt und bei 50°C gelagert. Nach einer Lagerdauer von 90 Tagen läßt sich das Produkt noch problemlos verarbeiten und zeigt unveränderte Produkteigenschaften.

### Beispiel 5

Beispiel 3 wird wiederholt, mit der Änderung, daß kein Di-2-ethylhexylphosphat zugesetzt wird. Das Produkt wird in eine handelsübliche Kartusche abgefüllt und bei 50°C gelagert. Nach einer Lagerdauer von 22 Tagen läßt sich das Produkt nicht mehr aus der Kartusche auspressen und ist geliert.

### Beispiel 6

Beispiel 4 wird wiederholt, mit der Änderung, daß keine Mono-2-ethylhexylphosphat zugesetzt wird. Das Produkt wird in eine handelsübliche Kartusche abgefüllt und bei 50°C gelagert. Nach einer Lagerdauer von 25 Tagen läßt sich das Produkt nicht mehr aus der Kartusche auspressen und ist geliert.

## Patentansprüche

1. Über eine Silanpolykondendation vernetzende Polyurethanmassen aus
A) mindestens einem alkoxysilanfunktionellen Polyurethan mit Endgruppen der allgemeinen Formel (I) 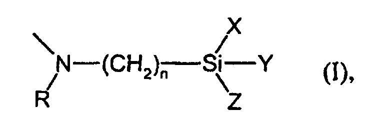 in welcher
R für einen organischen Rest mit 1 bis 12 Kohlenstoffatomen steht,
n für die Zahl 2, 3 oder 4 steht und
X, Y, Z gleiche oder verschiedene organische Reste darstellen, mit der Maßgabe, daß mindestens einer der Reste eine Alkoxygruppe mit 1 bis 4 Kohlenstoffatomen, vorzugsweise eine Methoxy- oder Ethoxygruppe darstellt,
B) mindestens einem basischen Füllstoff,
C) mindestens einer Phosphorverbindung aus der Gruppe der Orthophosphorsäureester und/oder eines Esters oder Polyphosphorsäure der allgemeinen Formel (II)
O=P(OR')₃₋ₘ(OH)ₘ (II),
in welcher
m für die Zahl 1 oder 2 steht
R' für einen gegebenenfalls substituierten linearen oder verzweigten C₁-C₃₀-Alkyl-, Acyl-, C₂-C₃₀-Alkenyl- oder Alkoxyalkyl-, C₅-C₁₄-Cycloalkyl- oder Arylrest oder ein Triorganosilyl- oder Diorganolkoxysilylrest steht, der innerhalb des Moleküls gleich oder verschieden sein kann
D) mindestens einem Aminosilan der allgemeinen Formel (III) 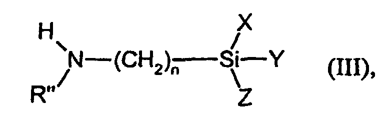 in welcher
R" für ein Wasserstoffatom, einen aliphatischen Kohlenwasserstoffrest mit 1 bis 4 Kohlenstoffatomen, eine Trialkoxysilylpropylgruppe oder eine Aminoethylgruppe steht und n, bzw. X, Y, Z die bei Formel (I) genannte Bedeutung haben,
E) metallorganischen Verbindungen und
F) gegebenenfalls weiteren Hilfsstoffen.

2. Über eine Silanpolykondensation vernetzende Polyurethanmassen gemäß Anspruch 1, **dadurch gekennzeichnet, daß** als Komponente A) mindestens ein Alkoxysilyl-funktionelles Polyurethan der allgemeinen Formel (I) 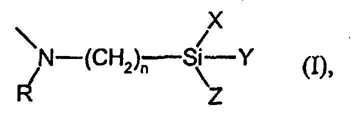 eingesetzt wird,
worin
X, Y und Z jeweils für eine Methoxygruppe steht.

3. Über eine Silanpolykondensation vernetzende Polyurethanmassen gemäß Anspruch 1, **dadurch gekennzeichnet, daß** als Komponente A) mindestens ein Alkoxysilyl-funktionelles Polyurethan der allgemeinen Formel (I) 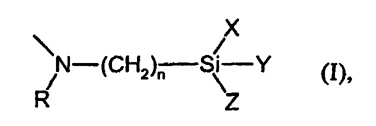 eingesetzt wird,
worin
R für einen Rest der allgemeinen Strukturformel (Ib) 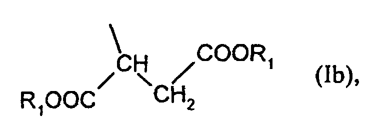
steht,
in welcher
R₁ eine Alkylgruppe mit 1 bis 4 Kohlenstoffatomen bedeutet,
steht.

4. Über eine Silanpolykondensation vernetzende Polyurethanmassen gemäß Anspruch 1, **dadurch gekennzeichnet, daß** als Komponente D) Aminosilanverbindungen der allgemeinen Strukturformel (Ia) 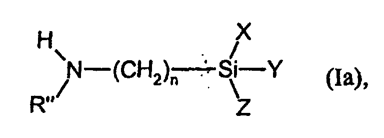 in welcher
R" für eine Aminoethylgruppe steht,
n für die Zahl 3 steht und
X, Y, Z für Methoxy oder Ethoxyreste stehen,
eingesetzt wird.

5. Verfahren zur Herstellung von kondensationsvernetzenden Polyurethanmassen gemäß Anspruch 1, **dadurch gekennzeichnet, daß** die Komponenten A), B), C), E) sowie gegebenenfalls F) unter Ausschluß von Feuchtigkeit vermischt werden und anschließend mit der Komponente D) versetzt werden.

6. Verwendung von kondensationsvernetzenden Polyurethanmassen gemäß Anspruch 1 als Dichtstoff, Kleb- oder Beschichtungsmaterial.

## Claims

1. Polyurethane compositions which crosslink via silane polycondensation, comprising
A) at least one alkoxysilane-functional polyurethane containing terminal groups of general formula (I) 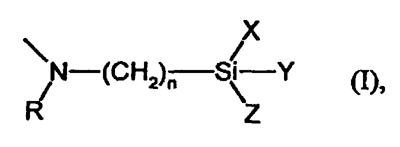 wherein
R represents an organic radical comprising 1 to 12 carbon atoms,
n represents the numbers 2, 3 or 4, and
X, Y, Z constitute identical or different organic radicals, with the proviso that at least one of the radicals constitutes an alkoxy group comprising 1 to 4 carbon atoms, preferably a methoxy or an ethoxy group,
B) at least one basic filler,
C) at least one phosphorus compound from the group comprising esters of orthophosphoric acid and/or an ester or polyphosphoric acid of general formula (II)
O=P(OR')₃₋ₘ(OH)ₘ (II),
wherein
m represents the numbers 1 or 2,
R' represents a linear or branched C₁-C₃₀ alkyl, acyl, C₂-C₃₀ alkenyl, alkoxyalkyl, C₅-C₁₄ cycloalkyl or aryl radical, which is optionally substituted, or a triorganosilyl or diorganoalkoxysilyl radical, which can be the same or different within the molecule,
D) at least one aminosilane of general formula (III) 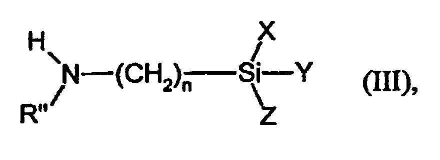 wherein
R" represents a hydrogen atom, an aliphatic hydrocarbon radical comprising 1 to 4 carbon atoms, a trialkoxysilylpropyl group or an aminoethyl group, and n, X, Y, and Z have the meanings given for formula (I),
E) organometallic compounds, and
F) optionally other adjuvant substances.

2. Polyurethane compositions which crosslink via silane polycondensation according to claim 1, **characterised in that** at least one alkoxysilyl-functional polyurethane of general formula (I) 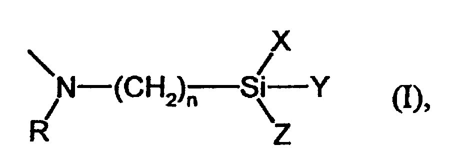 is used as component A),
wherein
X, Y and Z each represent a methoxy group.

3. Polyurethane compositions which crosslink via silane polycondensation according to claim 1, **characterised in that** at least one alkoxysilyl-functional polyurethane of general formula (I) 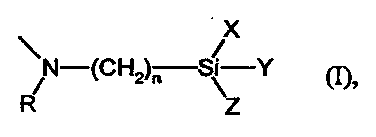 is used as component A),
wherein
R represents a radical of general structural formula (Ib) 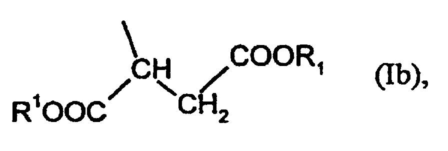
wherein
R₁ denotes an alkyl group comprising 1 to 4 carbon atoms.

4. Polyurethane compositions which crosslink via silane polycondensation according to claim 1, **characterised in that** aminosilane compounds of general structural formula (Ia) 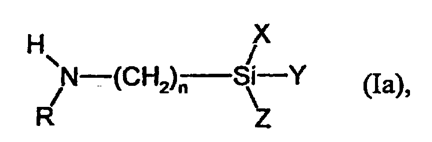 are used as component D),
wherein
R" represents an aminoethyl group,
n represents the number 3, and
X, Y and Z represent methoxy or ethoxy radicals.

5. A method of producing polyurethane compositions which crosslink by condensation according to claim 1, **characterised in that** components A), B), C), E), and optionally F), are mixed with the exclusion of moisture and are subsequently treated with component D).

6. The use of the polyurethane compositions which crosslink by condensation according to claim 1 as a sealing material, adhesive material or coating material.

## Revendications

1. Matériaux de polyuréthanne réticulant par polycondensation de silane, consistant en :
A) au moins un polyuréthanne à fonction alcoxysilane, avec des radicaux terminaux de la formule générale (I) : 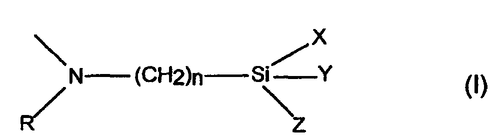 dans laquelle :
R représente un reste organique ayant 1 à 12 atomes de carbone,
n représente le nombre 2, 3 ou 4, et
X, Y, Z représentent des restes organiques identiques ou différents, avec la condition qu'au moins l'un des restes représente un radical alcoxy ayant 1 à 4 atomes de carbone, de préférence le radical méthoxy ou éthoxy,
B) au moins une charge basique,
C) au moins un composé phosphoré parmi le groupe des esters d'acide orthophosphorique et/ou un ester ou acide polyphosphorique de la formule générale (II) :
O=P(OR')₃₋ₘ(OH)ₘ (II)
dans laquelle:
m représente le nombre 1 ou 2;
R' représente un reste linéaire ou ramifié, le cas échéant substitué, alcoyle en C₁-C₃₀, acyle, alcoxyalcoyle ou alcényle en C₂-C₃₀, cycloalcoyle en C₅-C₁₄ ou aryle, ou un reste triorganosilyle ou diorganolcoxysilyle, qui peuvent être identiques ou différents au sein de la molécule ;
D) au moins un aminosilane de la formule générale (III) : 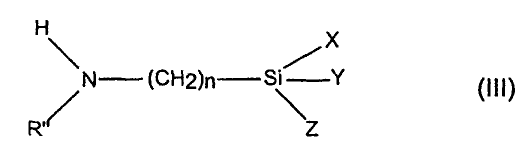 dans laquelle :
R'' représente l'atome d'hydrogène, un reste hydrocarbure aliphatique ayant 1 à 4 atomes de carbone, un radical trialcoxysilylpropyle ou le radical aminoéthyle, et n et respectivement X, Y, Z ont la signification indiquée pour la formule (I) ;
E) des composés métallo-organiques, et
F) le cas échéant, d'autres auxiliaires

2. Matériaux de polyuréthanne réticulant par polycondensation de silane, suivant la revendication 1, **caractérisés en ce que** comme composant A), on met en oeuvre au moins un polyuréthanne à fonction alcoxysilyle de la formule générale (I) : 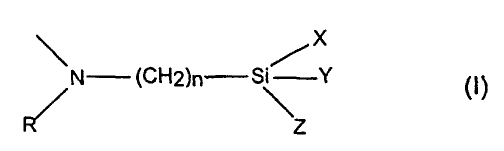 dans laquelle :
X, Y, Z représentent chacun le radical méthoxy.

3. Matériaux de polyuréthanne réticulant par polycondensation de silane, suivant la revendication 1, **caractérisés en ce que** comme composant A), on met en oeuvre au moins un polyuréthanne à fonction alcoxysilyle de la formule générale (I) : 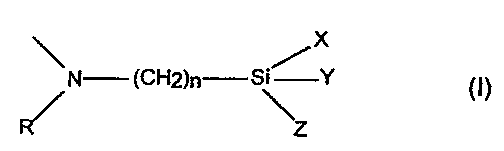 dans laquelle :
R représente un reste de la formule générale (Ib) : 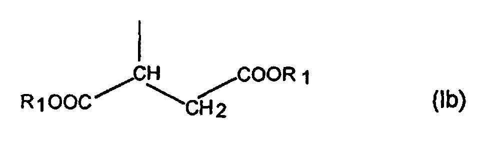
dans laquelle :
R₁ représente un radical alcoyle ayant 1 à 4 atomes de carbone.

4. Matériaux de polyuréthanne réticulant par polycondensation de silane, suivant la revendication 1, **caractérisés en ce que** comme composant D), on met en oeuvre des composés aminosilane de la formule générale (Ia) : 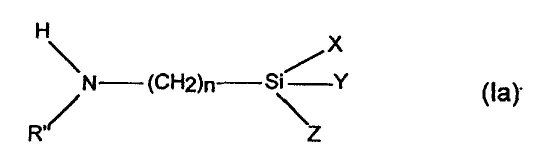 dans laquelle :
R'' représente le radical aminoéthyle,
n représente le nombre 3, et
X, Y, Z représentent le radical méthoxy ou éthoxy.

5. Procédé de préparation des matériaux de polyuréthanne réticulant par condensation suivant la revendication 1, **caractérisé en ce que** les composants A), B), C), E), ainsi que le cas échéant F) sont mélangés en l'absence d'humidité, et ensuite, on ajoute le composant D).

6. Utilisation des matériaux de polyuréthanne réticulant par condensation suivant la revendication 1, comme matière d'étanchéité, masse collante ou agent de revêtement.
